# FASCICULE DE BREVET EUROPEEN

(11) **EP 3 869 158 B1**
(45) Date de publication et mention de la délivrance du brevet: **19.10.2022**
(21) Numéro de dépôt: 20210351.1
(22) Date de dépôt: 27.11.2020
(51) Int. Cl.: G01C 23/00, G02B 27/01, G06F 3/01, G02B 27/00, B64D 43/00

(54) **PROCÉDÉ ET DISPOSITIF D'AIDE AU PILOTAGE D'UN AÉRONEF**
HILFSVERFAHREN UND VORRICHTUNG ZUR STEUERUNG EINES LUFTFAHRZEUGS
METHOD AND DEVICE TO ASSIST WITH PILOTING AN AIRCRAFT

(30) Priorité: 20.02.2020 FR 2001704
(43) Date de publication de la demande: 25.08.2021
(73) Titulaire: Airbus Helicopters, 13725 Marignane Cedex (FR)
(72) Inventeur: ASTRUC, Joël, 13540 PUYRICARD (FR)
(74) Mandataire: GPI Brevets

(56) Documents cités:
- FR-A1- 3 052 553
- FR-A1- 3 060 116
- JP-A- S63 251 399
- US-A1- 2019 317 718
- US-B1- 7 928 927
- US-B1- 9 244 280
- US-B1- 9 581 819

## Description

La présente invention concerne un système et un procédé d'aide au pilotage d'un aéronef, et par exemple d'un giravion.

Plus particulièrement, le système d'aide au pilotage se trouve dans le domaine technique des dispositifs configurés pour afficher des informations sur un afficheur porté par la tête d'un pilote et sur au moins un écran d'une planche de bord.

Un aéronef peut être muni de divers afficheurs pour afficher des informations utiles pour un pilote. Le terme « information » peut désigner des symboles qui incluent des formes géométriques, des chiffres, des lettres, ces symboles pouvant varier dans le temps et pouvant représenter des grandeurs physiques ou des objets notamment. Parmi ces informations, l'homme du métier distingue des informations dites « primaires » et des informations dites « secondaires ».

Les informations primaires sont relatives à des informations de pilotage à court terme, voire à des informations essentielles de pilotage. Les informations de pilotage à court terme peuvent comprendre notamment au moins un angle d'attitude de l'aéronef, un cap suivi, une vitesse air de l'aéronef, une vitesse ascensionnelle par exemple mesurée avec un variomètre, une altitude barométrique de l'aéronef, une hauteur de l'aéronef par exemple mesurée avec une radiosonde, un facteur de charge de l'aéronef, des données de navigation, une information de première limitation d'une source motrice de l'aéronef, voire des alarmes éventuelles. Par exemple, un afficheur d'informations primaires à court terme peut afficher un symbole de vecteur vitesse, une échelle d'assiette, une échelle d'altitude, une échelle de vitesse et une échelle de roulis, un cap et diverses alarmes. Les informations de pilotage essentielles comprennent les informations de pilotage à court terme et des informations complémentaires jugées essentielles pour le pilotage d'un aéronef donné, telles que par exemple une vitesse de rotation d'une voilure tournante sur un giravion, une quantité de carburant restant dans l'aéronef et des messages d'alerte.

Les informations secondaires regroupent toutes les autres informations affichables et par exemple des données météorologiques, des données d'établissement d'une route à suivre, des données relatives à des pressions et/ou des températures d'huile, des pressions et/ou des températures de gaz, des indications relatives à une source d'énergie électrique telles qu'un ampérage ou un voltage, des pressions de carburant, des pressions de pneus, des données relatives à la sortie d'un train d'atterrissage, des images provenant d'une caméra de surveillance, des données relatives à un treuil embarqué...

Pour présenter ces diverses informations à un pilote, un aéronef peut comprendre divers afficheurs.

A cet effet, un poste de pilotage d'un aéronef comprend usuellement une planche de bord voire un pupitre.

On rappelle que lorsque le pilote ou le copilote regarde l'environnement extérieur situé au dessus d'une planche de bord, il est courant d'indiquer qu'il se trouve dans une position « tête haute ». A l'inverse, lorsque le pilote ou le copilote regarde l'intérieur du cockpit et notamment la planche de bord ou le pupitre, il est courant d'indiquer que le pilote ou le copilote se trouve dans une position « tête basse ».

Dans ce contexte, un aéronef peut comprendre un ou plusieurs afficheurs de type « écran » et éventuellement de type « écran multifonction » disposés sur la planche de bord et/ou le pupitre d'un poste de pilotage. Pour observer les écrans multifonctions de la planche de bord ou du pupitre, un pilote ou le copilote est donc dans une position tête basse. Par exemple, sur un aéronef « monopilote » deux écrans multifonctions sont visibles par le pilote. Selon un autre exemple, sur un aéronef « bipilote » deux écrans multifonctions sont disposés en face du pilote et deux écrans multifonctions sont disposés en face du copilote. Selon un autre exemple, sur un aéronef « bipilote » un écran multifonction est disposé en face du pilote et un écran multifonction est disposé en face du copilote, un troisième écran multifonction étant agencé latéralement entre le pilote et le copilote.

Un écran multifonction peut afficher diverses pages pouvant contenir diverses informations. Ainsi, un écran multifonction peut afficher une page contenant des informations primaires et une ou plusieurs pages contenant des informations secondaires. Un pilote peut choisir la page à afficher.

Un aéronef peut aussi comprendre un afficheur pouvant être porté par la tête d'un pilote. Un tel afficheur peut être qualifié de « afficheur porté » par opposition à un écran multifonction disposé sur une planche de bord ou un pupitre. Un afficheur porté peut comprendre par exemple un système dénommé « head mounted display » en langue anglaise, un système dénommé « head worn display », un système dénommé « near eye display » en langue anglaise ou encore un système dénommé « Helmet Mounted Display » lorsqu'il est monté sur un casque, voire un système dénommé par exemple « Helmet Mounted Sight & Display ».

Un afficheur porté peut ainsi afficher une image présentant des informations primaires devant les yeux du pilote ou du copilote lorsque ce dernier est dans une position tête haute. Un afficheur porté permet alors de fournir à un pilote ou à un copilote les informations primaires dans la position tête haute en les superposant à la vue extérieure, là où il prend les références visuelles indispensables au pilotage à vue de son aéronef. Le pilote ou le copilote peut alors prendre connaissance des informations primaires sans avoir à quitter des yeux l'extérieur de l'aéronef.

Le pilote ou le copilote peut ainsi avoir connaissance des informations les plus pertinentes pour le pilotage, sans par exemple quitter des yeux un objet mobile relativement à l'aéronef.

De plus, l'afficheur porté peut collimater les images affichées à l'infini ou du moins à une distance bien supérieure à la distance le séparant de la planche de bord. Le pilote ou le copilote n'a ainsi aucune mise au point oculaire à effectuer afin de passer de la vue extérieure à la lecture des informations affichées sur l'afficheur porté. Cette caractéristique permet de limiter la fatigue du pilote et réduit le temps nécessaire pour accéder aux informations affichées.

Dans ce contexte, les écrans de la planche de bord sont usuellement configurés pour afficher les informations secondaires et les informations primaires au choix. L'afficheur porté affiche les informations primaires pertinentes pour le pilotage à chaque instant et cela en position tête haute. Ainsi, si en position tête haute le pilote ne peut accéder à des informations primaires sur l'afficheur porté pour diverses raisons, le pilote peut solliciter un écran de la planche de bord pour remédier à ce problème.

Un tel aéronef est intéressant dans la mesure où cet aéronef offre divers moyens d'accès aux informations primaires pour le pilote.

Par contre, les informations affichées sur un afficheur porté peuvent gêner la lecture d'informations affichées sur un écran lorsque l'utilisateur passe de la position tête haute à la position tête basse.

Pour remédier à ce problème, lorsque le pilote passe dans la position tête basse, un dispositif peut inhiber l'affichage d'informations sur l'afficheur porté. Cette caractéristique permet donc d'éviter que des informations affichées sur l'afficheur porté perturbent la lecture notamment des écrans multifonctions disposés sur la planche de bord et/ou le pupitre.

Une autre solution peut prévoir d'afficher sur l'afficheur porté des symboles en nombre minimisé et dissimilaires des symboles affichés sur les écrans pour éviter une confusion.

Le document US 7180476 propose un casque muni d'un écran affichant des symboles avec une luminosité réglable.

Les documents JP S63 251399 A, US 2019/317718 A, US 9244280 B1, US 7 928927 B2, US 9581819 B1, FR 3 052 553 A et FR 3060116 A. sont aussi connus.

La présente invention a alors pour objet de proposer un procédé innovant pour transmettre des informations à un pilote et/ou à un copilote.

L'invention concerne notamment un procédé d'aide au pilotage pour un aéronef, l'aéronef comportant un système d'affichage comprenant au moins un premier afficheur porté configuré pour être porté solidaire de la tête d'un premier utilisateur dans un cockpit de l'aéronef, l'aéronef comportant une planche de bord visible par le premier utilisateur dans une position tête basse, le système d'affichage comportant au moins un premier écran de la planche de bord, ledit système d'affichage comportant un dispositif de positionnement déterminant une information de position relative au premier afficheur porté,

Ce procédé comporte les étapes suivantes :
- sélection avec une interface de sélection homme-machine d'un premier mode d'affichage ou d'un deuxième mode d'affichage,
- sous condition que (i) ledit premier mode d'affichage soit sélectionné et que (ii) ledit au moins un premier écran affiche au moins un symbole tête basse distinct d'un symbole d'alarme par exemple tant que le premier utilisateur est dans une position tête haute, au moins en l'absence d'une alarme le procédé comporte un contrôle automatique dudit au moins un premier écran pour faire disparaitre visuellement ledit symbole tête basse tant qu'un champ d'affichage dudit premier afficheur porté est superposé au moins partiellement audit symbole tête basse à la vue du premier utilisateur, et/ou
- sous condition que (a) ledit deuxième mode d'affichage soit sélectionné et que (b) ledit premier afficheur porté affiche au moins un symbole tête haute dans le champ d'affichage par exemple tant que le premier utilisateur est dans une position tête haute, le procédé comporte un contrôle automatique dudit premier afficheur porté pour faire disparaitre visuellement ledit symbole tête haute tant que ledit symbole tête haute est superposé au moins partiellement audit au moins un premier écran ou à ladite planche de bord à la vue du premier utilisateur.

L'expression « premier afficheur porté est superposé au moins partiellement audit symbole tête basse à la vue du premier utilisateur » signifie que le premier afficheur porté affiche une image qui aux yeux du premier utilisateur est superposée au moins partiellement à un symbole affiché par le premier écran.

L'expression « ledit symbole tête haute est superposé au moins partiellement audit au moins un premier écran ou à ladite planche de bord à la vue du premier utilisateur » signifie que le premier afficheur porté affiche une image contenant un symbole qui aux yeux du premier utilisateur est superposée au moins partiellement au premier écran ou à la planche de bord.

L'aéronef peut comprendre un cockpit de type monopilote ou bipilote. Dès lors, le premier utilisateur peut être le pilote ou le copilote de l'aéronef. De plus, le premier écran peut être un écran situé devant le premier utilisateur par exemple.

Le premier écran peut afficher des informations de type primaire ou secondaire et notamment des pages classiques telles que la page connue sous l'acronyme « PFD » et l'expression anglaise « Primary Flight Display », la page connue sous l'acronyme « FND » et l'expression anglaise « Flight and Navigation display », la page connue sous l'acronyme « VMD » et l'expression anglaise « Vehicle Monitoring Display », la page connue sous l'acronyme « SVS » et l'expression anglaise « Synthetic Vision System », la page connue sous l'acronyme « DMAP » et l'expression anglaise « Digital Map ».

Le premier afficheur porté peut afficher des informations diverses et par exemple de type primaire, à savoir notamment des informations synthétiques de pilotage, de navigation, de mission et/ou de surveillance du véhicule.

Le dispositif de positionnement permet à un calculateur d'affichage de connaitre à tout moment la position du premier afficheur porté, à savoir par exemple sa position et son orientation dans le repère de l'aéronef.

Dès lors, le premier afficheur porté affiche des symboles dénommés « symboles tête haute » pour être clairement identifiés et le premier écran affiche des symboles dénommés « symboles tête basse » voire affiche des symboles dénommés « symboles d'alarme » pour être clairement identifiés.

Selon le procédé, le premier utilisateur peut utiliser l'interface de sélection homme-machine pour privilégier soit les informations de l'afficheur porté, soit les informations des écrans en cas de recouvrement à la vue du premier utilisateur.

En sélectionnant le premier mode d'affichage, le premier utilisateur privilégie le premier afficheur porté au détriment du premier écran. Par suite, si le premier afficheur porté est superposé au premier écran suite à un mouvement du premier utilisateur vers la position tête basse, hors cas d'alarme, les symboles tête haute restent visibles et les symboles tête basse entrant dans le champ d'affichage du premier afficheur porté sont rendus invisibles, par exemple sur commande d'un calculateur d'affichage, soit en étant supprimés soit en réduisant leur luminosité par exemple.

Un calculateur peut déterminer à l'aide d'informations de positionnement déterminées avec le dispositif de positionnement si le champ d'affichage du premier afficheur porté est au moins partiellement superposé aux yeux du premier utilisateur avec la planche de bord ou avec une surface d'affichage d'un premier écran sensiblement en temps réel.

Dans ces conditions, le premier mode d'affichage permet de masquer automatiquement la symbologie tête basse, sur choix du premier utilisateur via sa sélection, lorsque le premier utilisateur est en position tête basse tout en conservant actif le premier afficheur porté. Le premier utilisateur et par exemple le pilote voit ainsi de façon privilégiée la symbologie tête haute sur son premier afficheur porté en position tête basse et bien sûr en position tête haute.

En sélectionnant le deuxième mode d'affichage, le premier utilisateur privilégie le premier écran au détriment du premier afficheur porté. Par suite, si le premier afficheur porté est superposé au premier écran suite à un mouvement du premier utilisateur vers la position tête basse, hors cas d'alarme, les symboles tête haute deviennent invisibles et les symboles tête basse sont inchangés. La symbologie tête haute reste visible sur le premier afficheur dans la position tête haute.

Ce deuxième mode d'affichage permet de masquer automatiquement la symbologie tête haute, sur choix du premier utilisateur, lorsque le premier utilisateur est en position tête basse tout en conservant actif le premier écran. Le premier utilisateur voit ainsi de façon privilégiée la symbologie tête basse sur son premier écran en position tête basse.

Ce procédé peut permettre par exemple au pilote de tout aussi bien détailler des images vidéo précises acquises par un capteur externe et affichées sur un premier écran en sélectionnant le deuxième mode d'affichage, qu'acquérir sans ambiguïté la symbologie tête haute dans des postures de tête qui ne lui étaient pas autorisées selon l'état de l'art en sélectionnant le premier mode d'affichage. Par exemple, en sélectionnant le premier mode d'affichage ce procédé peut permettre d'exploiter des capteurs vidéo connus sous l'acronyme « EVS » et l'expression anglaise « Enhanced vision system » en affichant les images acquises sur le premier afficheur porté de façon conforme, notamment lors des phases d'approche et d'atterrissage, et aussi bien lorsque le premier utilisateur positionne sa tête dans la position tête haute que dans la position tête basse.

Ce procédé peut de plus comporter une ou plusieurs des caractéristiques qui suivent.

Selon un aspect, le procédé peut comporter les étapes suivantes :
- transmission d'un signal de choix porteur de ladite sélection par ladite interface de sélection homme-machine vers un calculateur d'affichage,
- transmission d'un signal de position dudit dispositif de positionnement vers ledit calculateur d'affichage, ledit calculateur d'affichage étant configuré pour contrôler ledit premier afficheur porté et ledit au moins un premier écran en fonction dudit signal de choix et dudit signal de position afin d'appliquer ledit premier mode d'affichage ou ledit deuxième mode d'affichage.

Ainsi, le calculateur d'affichage transmet un signal au premier afficheur porté et un signal au premier écran pour afficher les symboles requis en fonction du mode d'affichage choisi et éventuellement de sélections annexes faites par l'utilisateur.

Selon un aspect et lorsque le premier mode d'affichage est sélectionné, l'étape de contrôle dudit au moins un premier écran pour faire disparaître visuellement ledit symbole tête basse peut comporter une étape de réduction jusqu'à extinction d'une luminosité au moins d'une zone tête basse dudit au moins un premier écran, ladite zone tête basse contenant ledit au moins un symbole tête basse recouvert par ledit champ d'affichage.

Par exemple, un calculateur d'affichage transmet un signal de commande au premier écran pour faire diminuer la luminosité du premier écran, au moins dans une zone superposée avec le champ d'affichage à la vue du premier utilisateur.

En présence d'une alarme ou d'une zone d'alarme du premier écran contenant des symboles représentant des alarmes, les étapes précédentes peuvent être appliquées.

Selon une première alternative, sous condition que ledit au moins un premier écran affiche un symbole d'alarme dans une zone d'alarme et que ledit premier mode d'affichage soit sélectionné, le procédé peut comporter une étape de baisse d'une luminosité de la zone d'alarme contenant ledit symbole d'alarme jusqu'à un niveau non nul de luminosité tant que ledit champ d'affichage dudit premier afficheur porté couvre au moins partiellement ladite zone d'alarme.

Par exemple, ladite étape de baisse comporte une étape de réduction de ladite luminosité de la zone d'alarme d'une valeur initiale jusqu'à une valeur finale, ladite valeur finale étant égale à 50 pourcents de la valeur initiale plus ou moins 10 pourcents de la valeur initiale.

Une hystérésis peut être appliquée pour faire disparaitre des symboles tête basse durant le premier mode d'affichage lorsque le champ d'affichage et au moins une zone du premier écran se superposent.

Par exemple, quand le premier mode d'affichage est sélectionné, la luminosité du premier écran peut être progressivement diminuée, par exemple zone par zone lorsque le premier écran est partagé en une pluralité de zones, afin de ne pas provoquer un changement trop important et rapide de luminosité:
Eventuellement, la luminosité est diminuée jusqu'à l'extinction.

Si nécessaire et à savoir en présence d'une superposition du champ d'affichage avec une zone d'alarme, la luminosité est éventuellement réduite partiellement dans la zone d'alarme pour que les symboles représentant une alarme restent visibles.

A l'inverse, dans le deuxième mode d'affichage, les symboles tête haute superposés avec le premier écran voire avec la planche sont supprimés.

Selon un aspect, ledit au moins un premier écran comprenant éventuellement une zone d'alarme dans laquelle est affiché le cas échéant au moins un dit symbole d'alarme et au moins une zone tête basse dans laquelle est affiché le cas échéant au moins un dit symbole tête basse, ladite zone d'alarme peut être située sous ladite zone tête basse lorsque l'aéronef est normalement posé au sol.

Dès lors, la zone d'alarme est la dernière zone du premier écran susceptible d'être superposée avec le champ d'affichage du premier afficheur porté, lorsque le premier utilisateur baisse la tête, et est donc la dernière zone du premier écran susceptible d'être affectée lorsque le premier mode d'affichage est sélectionné.

Selon une deuxième alternative, le procédé peut comporter les étapes suivantes :
- émission d'une alarme avec un système d'alarme,
- sous condition de sélection dudit premier mode d'affichage, application automatique dudit deuxième mode d'affichage suite à ladite émission d'une alarme tant qu'un signal de retour au premier mode d'affichage n'est pas émis.

Selon cette deuxième alternative, le premier mode d'affichage est automatiquement remplacé par le deuxième mode d'affichage pour que le premier utilisateur puisse prendre connaissance de l'alarme émise sur le premier écran. En effet, les formats d'affichage des informations d'alarme et de surveillance du véhicule peuvent être plus complets sur le premier écran que sur le premier afficheur porté. Selon cette deuxième alternative, quand une alarme survient, même si le premier afficheur porté a été privilégié par une sélection du premier mode d'affichage, le premier écran devient automatiquement à nouveau privilégié. Les zones d'affichage du premier afficheur porté superposé aux yeux du pilote avec le premier écran voire la planche de bord sont masquées.

Eventuellement, ce changement est maintenu jusqu'à ce que le pilote ait consulté et acquitté l'alarme ou jusqu'à la disparition de l'alarme. Un tel acquittement vise à garantir que l'utilisateur a pris connaissance de l'alarme. Ainsi, le procédé peut comporter au moins une des procédures suivantes :
- acquittement de ladite alarme avec une interface d'acquittement homme-machine, ledit acquittement étant suivi d'une émission dudit signal de retour au premier mode d'affichage,
- disparition de ladite alarme, ladite disparition étant suivie d'une émission dudit signal de retour au premier mode d'affichage.

Selon un aspect, le procédé peut comporter une étape de détermination d'une position dudit premier afficheur porté dans un repère de l'aéronef, ledit procédé comportant une étape de détermination de la position dudit champ d'affichage par rapport au moins audit premier écran en fonction de ladite position et d'une définition géométrique mémorisée dudit cockpit.

Ainsi, un calculateur peut être configuré pour déterminer s'il y a superposition entre les symboles affichés sur le premier afficheur porté et les symboles affichés sur le premier écran tels que vus par le premier utilisateur en prenant en considération la position du premier afficheur porté et une définition géométrique mémorisée du cockpit. Par exemple, le calculateur applique des instructions mémorisées à cet effet.

Selon un aspect, le premier écran étant disposé en face du premier utilisateur, l'aéronef comportant au moins un dispositif d'affichage au regard d'un deuxième utilisateur ou partagé avec un deuxième utilisateur, quel que soit le premier mode d'affichage ou le deuxième mode d'affichage sélectionné, lorsque ledit champ d'affichage du premier afficheur porté couvre le dispositif d'affichage à la vue du premier utilisateur alors ledit premier afficheur porté peut être inhibé.

L'expression « au regard d'un deuxième utilisateur ou partagé » fait référence à un deuxième écran qui serait en face du deuxième utilisateur ou encore qui serait disposé entre le premier utilisateur et le deuxième utilisateur.

L'expression « ledit premier afficheur porté peut être inhibé » signifie que le premier afficheur porté n'affiche plus d'informations.

Par exemple, le procédé explicité précédemment peut être appliqué pour le premier utilisateur en regard du premier afficheur porté et du premier écran et aussi pour un deuxième utilisateur en regard d'un deuxième afficheur et d'un deuxième écran. Par exemple, le premier utilisateur est le pilote de l'aéronef, et le deuxième utilisateur est le copilote.

Si le premier utilisateur regarde le deuxième écran du copilote selon cet exemple, le procédé peut prévoir d'inhiber le premier afficheur porté quel que soit le mode d'affichage. En effet, selon ce procédé, le calculateur d'affichage considère que le pilote souhaite de fait voir les informations présentées sur le deuxième écran et inhibe alors le premier afficheur porté tant que le premier pilote regarde le deuxième écran.

Outre un procédé, l'invention vise un aéronef comportant un système d'affichage comprenant au moins un premier afficheur porté configuré pour être porté solidaire de la tête d'un premier utilisateur dans un cockpit de l'aéronef, l'aéronef comportant une planche de bord visible par le premier utilisateur dans une position tête basse, le système d'affichage comportant au moins un premier écran de la planche de bord, ledit système d'affichage comportant un calculateur d'affichage, ledit calculateur d'affichage étant configuré pour commander le premier afficheur porté et ledit au moins un premier écran, ledit système d'affichage comportant un dispositif de positionnement déterminant une information relative à un champ d'affichage couvert par ledit premier afficheur porté,

Cet aéronef comporte alors une interface de sélection homme-machine pour sélectionner au moins ledit premier mode d'affichage et ledit deuxième mode d'affichage au choix, ledit calculateur d'affichage étant relié à ladite interface de sélection homme-machine et étant configuré pour appliquer le procédé selon l'invention.

Par exemple, l'aéronef peut comporter un système d'alarme, et notamment un système d'alarme usuel.

Par exemple, l'aéronef peut comporter une interface d'acquittement homme-machine pour acquitter une alarme.

L'invention et ses avantages apparaîtront avec plus de détails dans le cadre de la description qui suit avec des exemples donnés à titre illustratif en référence aux figures annexées qui représentent :
la figure 1, une vue illustrant un aéronef selon l'invention,
la figure 2, un schéma illustrant le procédé selon l'invention,
la figure 3, un schéma illustrant un premier écran selon l'invention,
la figure 4, un schéma illustrant le premier mode d'affichage du procédé selon l'invention
la figure 5, un schéma illustrant le deuxième mode d'affichage du procédé selon l'invention.

Les éléments présents dans plusieurs figures distinctes sont affectés d'une seule et même référence.

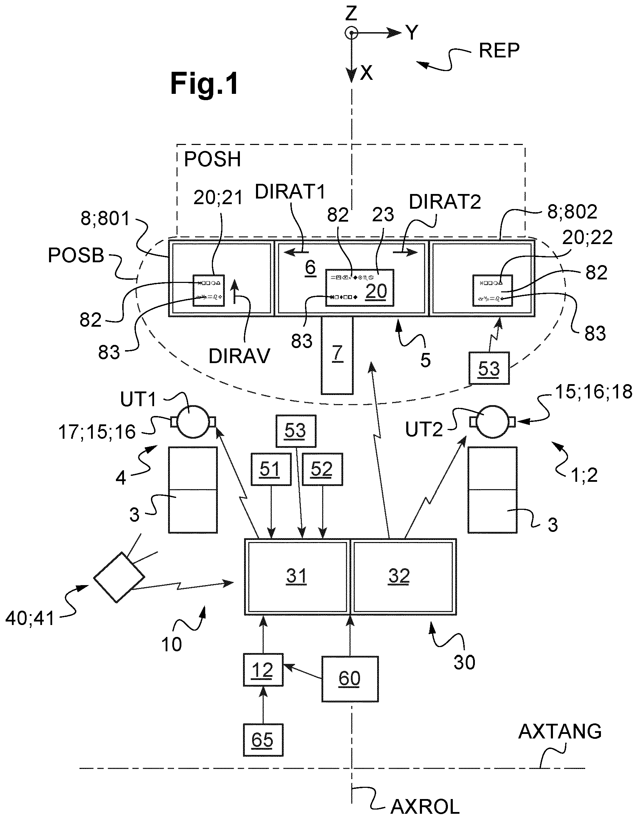

La figure 1 présente un véhicule 1 du type de l'invention. Ce véhicule 1 peut notamment être un aéronef tel qu'un avion ou un giravion. Seuls les organes du véhicule ayant un lien direct avec l'invention sont illustrés pour ne pas alourdir inutilement la figure 1.

Ce véhicule 1 comporte un cockpit 2 dans lequel se trouve au moins un siège 3 pour un premier utilisateur. Selon l'exemple illustré, le cockpit 2 comporte un siège pilote et un siège copilote accueillant un premier utilisateur UT1 et un deuxième utilisateur UT2. Selon une autre possibilité, le véhicule peut comprendre uniquement le premier utilisateur en étant monopilote.

De plus, le véhicule 1 comporte une planche de bord 5 voire un pupitre 7. La planche de bord 5 peut comporter un sous-ensemble dénommé panneau central 6 par commodité. Par exemple, le panneau central 6 se trouve dans la continuité du pupitre 7 selon une direction sensiblement parallèle à l'axe de roulis AXROL du véhicule 1.

Par ailleurs, la planche de bord 5 peut comporter au moins un panneau latéral 8 disposé en face d'un utilisateur assis sur un siège 3. Chaque panneau latéral 8 s'étend par exemple latéralement à partir du panneau central 6 selon une direction sensiblement parallèle à l'axe de tangage AXTANG du véhicule 1.

Par exemple, chaque panneau latéral 8 est agencé devant un utilisateur selon le sens de déplacement DIRAV vers l'avant du véhicule 1, à savoir par exemple devant un pilote ou un copilote.

Par exemple et selon l'illustration de la figure 1, chaque panneau latéral 8 peut être agencé sur un côté du panneau central 6 selon un sens DIRAT1, DIRAT2 sensiblement parallèle à l'axe de tangage AXTANG. Par exemple, deux panneaux latéraux 8 sont disposés latéralement de part et d'autre du panneau central 6, un premier panneau latéral 801 étant situé en face d'un premier utilisateur UT1, par exemple le pilote, et un deuxième panneau latéral 802 étant situé en face d'un deuxième utilisateur UT2, par exemple le copilote le cas échéant. Sur un véhicule monopilote, un seul panneau latéral 8 peut être agencé en face du pilote.

La planche de bord 5 et notamment chaque panneau latéral 8 et le panneau central 6 sont visibles par un pilote ou un copilote dans une position tête basse POSB. A l'inverse, un pilote ou un copilote peut visualiser un environnement extérieur au véhicule en regardant au dessus de la planche de bord 5 dans une position tête haute POSH.

Le véhicule 1 comporte un système d'affichage 10 permettant d'afficher diverses informations sous la forme de symboles. En particulier, des symboles peuvent être porteurs d'informations primaires et secondaires, ces notions étant connues de l'homme du métier et décrites précédemment.

Le système d'affichage 10 comporte au moins un écran 20 porté par la planche de bord 5, et par exemple un écran multifonction connu sous l'acronyque MFD et l'expression anglaise « Multi Functions Display ».

Ainsi, le système d'affichage 10 comporte au moins un écran 20 dénommé « premier écran 21 » agencé sur la planche de bord 5 pour être directement visible par un premier utilisateur UT1. Sur un aéronef monopilote, le système d'affichage 10 comporte au moins un premier écran 21 destiné à l'unique premier utilisateur UT1 et éventuellement porté par le premier panneau latéral 801. Sur un aéronef bipilote, le système d'affichage 10 comporte au moins un premier écran 21 destiné à un premier utilisateur UT1 éventuellement porté par le premier panneau latérale 801, et au moins un deuxième écran 22 destiné à un deuxième utilisateur UT2 éventuellement porté par le deuxième panneau latérale 802. En outre au moins un écran 23, voire un unique écran 23, peut être agencé sur le panneau central 6.

Chaque écran 20 peut être d'un type usuel. Un tel écran 20 peut être configuré pour afficher au moins un symbole tête basse 82 illustrant une information basse, cette information basse pouvant comprendre au moins une information primaire ou au moins une information secondaire qui est différente d'une information primaire. Un tel écran 20 peut aussi être configuré pour afficher au moins un symbole d'alarme 83 illustrant une alarme.

Par exemple, un écran 20 peut afficher au moins une page contenant uniquement un ou plusieurs symboles illustrant une ou plusieurs informations primaires et/ou au moins une page contenant uniquement un ou plusieurs symboles illustrant une ou plusieurs informations secondaires et/ou au moins une page contenant un ou plusieurs symboles illustrant une ou plusieurs informations primaires et un ou plusieurs symboles illustrant une ou plusieurs informations secondaires. Un utilisateur peut éventuellement choisir la ou les informations à afficher à chaque instant en utilisant une interface homme-machine.

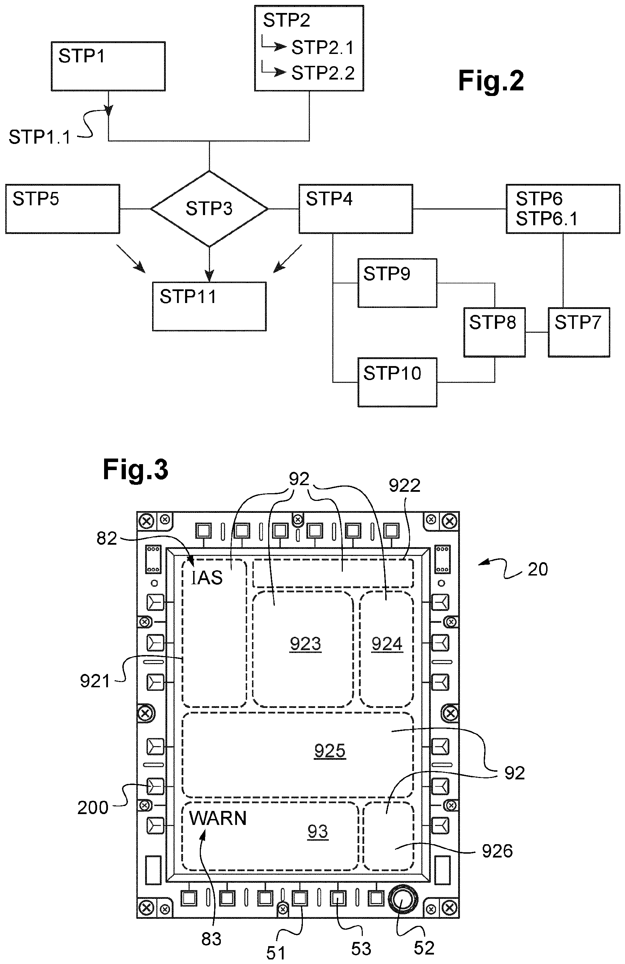

Selon l'exemple de la figure 3, une page affichée sur un écran 20 peut comprendre à la fois des symboles tête basse 82 et des symboles d'alarme 83. Par exemple, l'écran 20 est partagé en au moins une zone tête basse 92 comprenant au moins un symbole tête basse 82 et au moins une zone d'alarme 93 contenant le cas échéant au moins un symbole d'alarme 83.

Par exemple, une zone tête basse 921 contient des symboles tête basse 82 porteurs d'une vitesse de l'aéronef et d'indicateurs de puissance. Par exemple, une zone tête basse 922 contient des symboles tête basse 82 porteurs de données relatives au fonctionnement d'un système connu sous l'acronyme AFCS et l'expression anglaise « Automatic Flight Control System ». Par exemple, une zone tête basse 923 contient des symboles tête basse 82 porteurs de données relatives à un directeur de vol. Par exemple, une zone tête basse 924 contient des symboles tête basse 82 porteurs de données relatives à l'altitude de l'aéronef. Par exemple, une zone tête basse 925 contient des symboles tête basse 82 porteurs de données de navigation. Par exemple, une zone tête basse 926 contient des symboles tête basse 82 porteurs de données relatives au carburant embarqué.

Eventuellement, la zone d'alarme 93 est située au plus bas sur l'écran 20 lorsque l'aéronef est au sol. La zone d'alarme 93 est ainsi positionnée sous au moins une zone tête basse 92.

Selon un autre aspect, au moins un écran 20 peut comporter au moins une interface homme-machine 200, 51, 52, 53 tel qu'un bouton ou une face tactile par exemple. Selon un autre aspect, au moins un écran 20 peut comporter son propre calculateur.

En référence à la figure 1, chaque écran 20 peut être commandé par un calculateur dénommé par commodité « calculateur d'affichage 30 ». Un calculateur d'affichage 30 est ainsi relié par une connexion filaire ou non filaire à chaque écran multifonction 20.

Le calculateur d'affichage 30 peut comprendre un unique calculateur contrôlant plusieurs dispositifs, voire plusieurs dispositifs d'affichage, ou plusieurs calculateurs, communiquant entre eux. Le calculateur d'affichage 30 peut inclure un calculateur d'au moins un écran 20 le cas échéant. Par exemple, le calculateur d'affichage 30 peut comprendre un calculateur générateur de symboles tête haute 31 et un calculateur générateur de symboles tête basse 32, le calculateur générateur de symboles tête basse 32 étant dédié aux écrans multifonctions 20. Selon un autre exemple, un unique calculateur comporte au moins un segment de code dédié aux écrans multifonction 20, voire d'autres segments de code dédiés à d'autres afficheurs.

Chaque calculateur peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Dans un mode particulier de réalisation, ce calculateur d'affichage 30 comporte un calculateur, connu sous l'acronyme IMA et l'expression anglaise « Integrated Modular Avionics », pouvant remplir d'autres fonctions que l'affichage.

Pour générer les informations requises, le calculateur d'affichage 30 peut être relié à des senseurs 60. Par exemple, le calculateur d'affichage 30 est relié à un ou plusieurs senseurs 60 directement ou via au moins un calculateur avionique 12 par une liaison d'un réseau de communication.

Le terme « senseur » peut désigner un équipement comprenant un ou plusieurs capteurs ou équivalents voire un ou plusieurs calculateurs.

Chaque senseur 60 génère un signal par exemple numérique, analogique ou optique relatif à au moins une information. A titre d'exemple illustratif non exhaustif, le véhicule 1 peut comprendre des senseurs 60 comprenant au moins une centrale inertielle, au moins une radiosonde, au moins un variomètre, au moins un système anémobarométrique, au moins un système de localisation par satellites, au moins un système radar ou lidar, au moins un capteur de pression de gaz ou d'huile, au moins une jauge de volume de carburant ou d'huile, au moins un capteur de température, au moins un capteur de détection de limaille.... Les divers senseurs 60 permettant de générer les informations primaires et secondaires sont connus de l'homme du métier, la liste précédente étant juste donnée pour illustrer l'invention.

Par ailleurs, le système d'affichage 10 comporte au moins un afficheur porté 15 solidaire de la tête d'un utilisateur, à savoir au moins un premier afficheur porté 17 agencé sur la tête d'un premier utilisateur UT1 et éventuellement un deuxième afficheur porté 18 agencé sur la tête d'un deuxième utilisateur UT2. Par exemple, chaque afficheur porté 15 est agencé sur un casque 16. Chaque afficheur porté 15 peut être d'un type usuel, et par exemple peut être un système dénommé « head mounted display » en langue anglaise, un système dénommé « head worn display », un système dénommé « near eye display » en langue anglaise, un système dénommé « Helmet Mounted Display » lorsque monté sur un casque ou encore par exemple « Helmet Mounted Sight & Display ».

Chaque afficheur porté 15 peut être commandé par le calculateur d'affichage 30 pour afficher des symboles dénommés par commodité « symboles tête haute » dans un champ d'affichage. Le calculateur d'affichage 30 est ainsi relié par une connexion filaire ou non filaire à chaque afficheur porté 15.

Par exemple, le calculateur d'affichage 30 peut comprendre un calculateur générateur de symboles tête haute 31 dédié aux afficheurs portés 15. Selon un autre exemple, un unique calculateur comporte au moins un segment de code dédié aux afficheurs portés 15.

Par ailleurs, le système d'affichage 10 comporte un dispositif de positionnement 40 déterminant une information de position relative à la position voire à l'orientation de chaque afficheur porté 15 dans un repère REP attaché à l'aéronef, et de fait relative à la position du champ d'affichage dans lequel apparaisse les symboles tête haute affichés par l'afficheur porté.

Le dispositif de positionnement 40 est relié au calculateur d'affichage 30 par une liaison filaire ou non filaire afin de lui transmettre un signal par exemple analogique, numérique ou optique. Ce signal permet au calculateur d'affichage 30 de déterminer selon une technique connue où sont positionnés les symboles tête haute vus par l'utilisateur par rapport au cockpit 2, et notamment par rapport à la planche de bord et/ou au premier écran.

Par exemple, le dispositif de positionnement 40 comporte, pour un afficheur porté 15, un capteur 4 qui est solidaire de cet afficheur porté 15, tel qu'un capteur inertiel.

De manière complémentaire ou alternative, le dispositif de positionnement 40 comporte un capteur monté solidaire du cockpit 2. Selon l'exemple illustré, le dispositif de positionnement 40 comporte ainsi au moins une caméra 41 disposée de façon à filmer automatiquement la tête de l'utilisateur. Selon un autre exemple, le dispositif de positionnement peut comporter un système magnétique d'un type connu.

Le dispositif de positionnement 40 peut comporter ou coopérer avec un calculateur de positionnement exploitant les signaux reçus pour déterminer la position des symboles tête haute vus par les yeux de l'utilisateur dans le repère REP, à trois axes X,Y,Z, du véhicule 1 selon des techniques connues. Alternativement, le calculateur d'affichage 30 exploite les signaux reçus à cet effet.

Le dispositif de positionnement 40 permet ainsi au calculateur d'affichage 30 de déterminer la position de chaque symbole tête haute par rapport au moins à la planche de bord et aux yeux des utilisateurs. Le cas échéant, le calculateur de positionnement communique avec le calculateur d'affichage. Par suite, suivant la variante le dispositif de positionnement ou le calculateur d'affichage 30 détermine si au moins un symbole tête haute est superposé à la planche de bord ou à un écran vu par les yeux d'un utilisateur.

Selon un autre aspect, le véhicule 1 peut comporter au moins un sélecteur d'affichage 52 pour sélectionner chaque information à afficher sur l'afficheur porté 15 et/ou à afficher sur un écran 20.

Le sélecteur d'affichage 52 peut prendre la forme d'une interface homme-machine, telle que par exemple un bouton, un écran tactile, un clavier, une unité de pointage de type trackball ou souris...

Le sélecteur d'affichage 52 peut être relié par une liaison filaire ou non filaire au calculateur d'affichage 30 et/ou à l'afficheur porté 15 et/ou à un écran voire peut faire partie d'un tel écran ou d'un tel afficheur porté 15.

Selon un autre aspect, le véhicule 1 peut comporter une interface 51 de sélection homme-machine manœuvrable au moins entre deux états correspondant respectivement à un premier mode d'affichage et à un deuxième mode d'affichage explicités par la suite.

L'interface 51 de sélection homme-machine peut prendre la forme d'une interface homme-machine, telle que par exemple un bouton, un écran tactile, un clavier, une unité de pointage de type trackball ou souris...

L'interface 51 de sélection homme-machine peut être reliée par une liaison filaire ou non filaire au calculateur d'affichage 30 et/ou à l'afficheur porté 15 et/ou à au moins un écran 20 voire peut faire partie d'un écran ou d'un tel afficheur porté 15.

Selon un autre aspect, le véhicule 1 peut comporter un système d'alarme 65 pour détecter une panne de l'aéronef. Un tel système d'alarme 65 peut prendre la forme d'un réseau de détection de pannes usuel d'un véhicule 1 et en particulier d'un aéronef. Un tel système d'alarme 65 peut comprendre par exemple un calculateur et des capteurs divers appliquant des algorithmes connus pour détecter une panne.

De plus, le véhicule 1 peut comporter une interface 53 d'acquittement homme-machine pour acquitter une alarme suite à sa génération.

L'interface 53 d'acquittement homme-machine peut prendre la forme d'une interface homme-machine, telle que par exemple un bouton, un écran tactile, un clavier, une unité de pointage de type trackball ou souris...

L'interface 53 d'acquittement homme-machine peut être reliée par une liaison filaire ou non filaire au calculateur d'affichage 30 et/ou à l'afficheur porté 15 et/ou à au moins un écran 20 voire peut faire partie d'un écran et/ou du système d'alarme 65.

Dès lors, le calculateur d'affichage 30 est configuré pour appliquer le procédé illustré schématiquement sur la figure 2 afin de contrôler les différents dispositifs d'affichage en transmettant au moins un signal de commande numérique, analogique ou optique par exemple vers chaque afficheur porté 15 et chaque écran 20. Ce procédé comporte une ou plusieurs des étapes suivantes réalisées de manière itérative.

Le procédé comporte une étape de sélection STP1 d'un premier mode d'affichage ou d'un deuxième mode d'affichage. La sélection est effectuée par le premier utilisateur UT1 en utilisant l'interface 51 de sélection homme-machine.

Dès lors, durant une étape de transmission STP1.1 cette interface 51 de sélection homme-machine transmet un signal par exemple analogique, numérique ou optique porteur du choix effectué par le premier utilisateur UT1 au calculateur d'affichage 30.

Lorsque le premier mode d'affichage est sélectionné, le calculateur d'affichage 30 privilégie l'affichage de symboles tête haute sur le premier afficheur porté 17 au détriment du premier écran 21, à savoir en cas de recouvrement. Lorsque le deuxième mode d'affichage est sélectionné, le calculateur d'affichage 30 privilégie l'affichage de symboles tête basse sur le premier écran 21 au détriment du premier afficheur porté 17, à savoir en cas de recouvrement.

Pour évaluer si un tel recouvrement apparaît, durant une étape de positionnement STP2, le calculateur d'affichage 30 détermine si ledit champ d'affichage dudit premier afficheur porté 17 couvre au moins partiellement la planche de bord voire ledit au moins un premier écran 21 multifonction et/ou qu'au moins un symbole tête haute couvre la planche de bord 5 voire le premier écran 21 vu par le premier utilisateur. Ainsi, le calculateur d'affichage 30 détermine si ledit champ d'affichage dudit premier afficheur porté 17 est superposé au moins partiellement à la planche de bord voire audit au moins un premier écran 21 multifonction et/ou si au moins un symbole tête haute est superposé à la planche de bord 5 voire au premier écran 21 vu par le premier utilisateur.

Par exemple, durant une étape de mesure STP2.1 le dispositif de positionnement 40 transmet un signal de position au calculateur d'affichage 30. Le calculateur d'affichage 30 est en effet configuré pour contrôler l'affichage d'informations sur le premier afficheur porté 17 et sur le premier écran 21 en fonction du signal de choix émis par l'interface 51 de sélection homme-machine et du signal de position.

Le calculateur d'affichage 30 reçoit un signal de position numérique, analogique ou optique du dispositif de positionnement 40 porteur directement ou indirectement de la position de chaque symbole tête haute par rapport à la planche de bord 5 ou au premier écran 21.

A partir du signal de position, durant une étape d'analyse STP2.2 le calculateur d'affichage 30 acquiert, voire détermine, si le premier utilisateur UT1 est dans la position tête basse et si le champ d'affichage 80 du premier afficheur 17 porté couvre la planche de bord 5 et/ou le premier écran 21 vu par les yeux du premier utilisateur UT1, voire si au moins un symbole tête haute est superposé à la planche de bord 5 ou au premier écran 21. Par exemple, le calculateur d'affichage 30 ou un éventuel calculateur de positionnement détermine à l'aide des données transmises par le ou les capteurs du dispositif de positionnement 40 si le champ d'affichage 80 du premier afficheur 17 porté correspondant à l'orientation de la tête du premier l'utilisateur UT1 présente une intersection avec une zone incluant la planche de bord 5 ou le premier écran 21 selon une technique connue et éventuellement d'une définition géométrique du cockpit 2.

Ainsi, le procédé peut comporter une étape de détermination d'une position du premier afficheur porté 17 dans le repère REP de l'aéronef 1 suivie d'une étape de détermination de la position du champ d'affichage 80 par rapport au moins au premier écran 21 en fonction de la position du premier afficheur porté 17 et d'une définition géométrique du cockpit 2.

Quel que soit le mode d'affichage choisi, durant une étape non conflictuelle STP3, le calculateur d'affichage 30 contrôle l'affichage d'informations sur le premier afficheur porté 17 pour afficher au moins un symbole tête haute tant que le premier utilisateur UT1 est dans la position tête haute POSH. De plus, le calculateur d'affichage 30 contrôle l'affichage d'informations sur le premier écran 21 pour afficher au moins un symbole tête basse tant que le premier utilisateur UT1 est dans la position tête haute POSH.

Les divers symboles peuvent éventuellement être choisis par le premier utilisateur UT1 à l'aide des sélecteurs d'affichage 52.

Ainsi, si la tête du premier utilisateur UT1 est dans une position haute POSH, le calculateur d'affichage 30 transmet un signal de commande d'affichage numérique, analogique ou optique au premier afficheur porté 17. Suite à la réception du signal de commande d'affichage provenant du calculateur d'affichage 30, le premier afficheur porté 17 affiche alors au moins un ou plusieurs symboles tête haute par exemple relatifs à une ou plusieurs informations primaires ou secondaires. Selon une alternative, le premier afficheur porté 17 affiche uniquement une ou plusieurs informations primaires afin que ce premier afficheur porté 17 ne puisse pas afficher des informations secondaires. Le signal de commande d'affichage peut notamment contenir les informations à afficher. Chaque information primaire ou autre peut être issue d'un calculateur avionique et/ou d'un senseur 60. Selon un exemple, le premier afficheur porté 17 affiche alors un symbole représentant le véhicule 1, un symbole représentant un vecteur vitesse du véhicule 1, une échelle d'assiette du véhicule 1. De plus, sont aussi affichées une échelle d'altitude ou de hauteur, une échelle de vitesse et une échelle de roulis du véhicule 1.

De plus, le calculateur d'affichage 30 transmet un signal de commande d'affichage numérique, analogique ou optique au premier écran 21. Suite à la réception du signal de commande d'affichage provenant du calculateur d'affichage 30, le premier écran 21 affiche alors au moins un ou plusieurs symboles tête basse et le cas échéant un ou plusieurs symboles d'alarme.

Par contre, lorsque le premier utilisateur UT1 passe dans la position tête basse, le calculateur d'affichage 30 privilégie soit le premier afficheur porté 17 soit le premier écran 21 en fonction du choix effectué par le premier utilisateur lors de l'étape de sélection STP1.

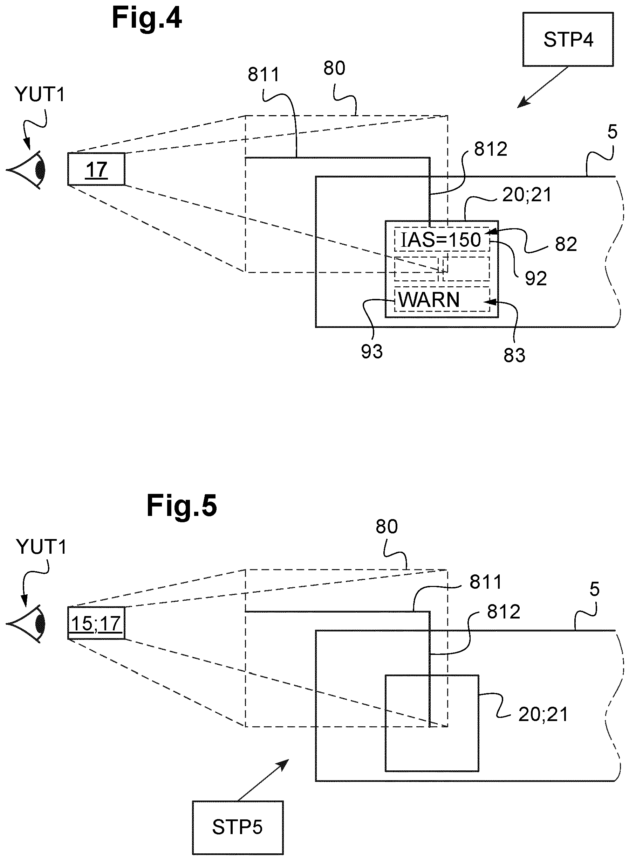

En référence à la figure 5, une étape de mise en valeur STP5 du premier écran 21 est mise en œuvre lorsqu'à un même instant le deuxième mode d'affichage est sélectionné et un symbole tête haute 812 couvre, aux yeux YUT1 du premier utilisateur UT1, au moins partiellement le premier écran 21 ou la planche de bord 5 suivant la variante. Le calculateur d'affichage 30 transmet un signal par exemple analogique, numérique ou optique au premier afficheur porté 17 pour faire disparaitre visuellement ledit symbole tête haute 812 en conflit avec la planche de bord 5 ou le premier écran 21. Les autres symboles tête haute 811 qui ne sont visuellement pas en conflit avec la planche de bord 5 ou le premier écran 21 sont soit aussi rendus invisibles soit conservés visibles.

En référence à la figure 4, une étape de mise en valeur STP4 du premier afficheur porté 17 est mise en œuvre lorsqu'à un même instant le premier mode d'affichage est sélectionné et le champ d'affichage 80 du premier afficheur porté 17 couvre au moins partiellement un symbole tête basse 82 distinct d'un symbole d'alarme 83 aux yeux YUT1 du premier utilisateur UT1. Le calculateur d'affichage 30 transmet un signal par exemple analogique, numérique ou optique au premier écran 21 pour faire disparaitre visuellement le symbole tête basse 82 en conflit avec le champ d'affichage 80.

Par exemple, suite à la réception de ce signal, durant une étape de transition STP6 le premier écran 21 peut réduire jusqu'à extinction une luminosité de chaque zone tête basse 92 du premier écran 21 contenant au moins un symbole tête basse 82 couvert par le champ d'affichage 80.

Lorsque le premier écran 21 affiche un symbole d'alarme 83 dans une zone d'alarme 93 et que ledit premier mode d'affichage est sélectionné, le premier écran 21 peut mettre en œuvre une étape de baisse STP6.1 d'une luminosité de la zone d'alarme 93 contenant le symbole d'alarme 83 jusqu'à un niveau non nul lorsque le champ d'affichage 80 couvre au moins partiellement ladite zone d'alarme 93. Par exemple, la luminosité de la zone d'alarme 93 peut être réduite d'une valeur initiale jusqu'à une valeur finale égale à 50 pourcents de la valeur initiale plus ou moins 10 pourcents de la valeur initiale.

La zone d'alarme 93 peut être située au plus bas du premier écran 21 pour minimiser la probabilité de devoir baisser la luminosité de la zone d'alarme 93. Par exemple, la zone d'alarme 93 est située sous la ou les zones tête basse 92 lorsque l'aéronef 1 est normalement posé au sol.

Par ailleurs, durant une étape d'alerte STP7, une alarme peut être émise par le système d'alarme 65 alors que le premier mode d'affichage est appliqué.

Eventuellement, lorsque le premier mode d'affichage est sélectionné, durant une étape provisoire STP8, le calculateur d'affichage 30 est configuré pour appliquer le deuxième mode d'affichage suite à l'émission d'une alarme tant qu'un signal de retour au premier mode d'affichage n'est pas émis.

Un tel signal de retour peut résulter d'un acquittement volontaire de l'alarme par une manœuvre STP9 de l'interface 53 d'acquittement homme-machine, ledit acquittement étant suivi d'une émission dudit signal de retour au premier mode d'affichage. Par exemple, le signal de retour peut prendre la forme d'un signal émis par l'interface 53 d'acquittement homme-machine et transmis au calculateur d'affichage 30.

Un tel signal de retour peut aussi résulter d'une disparation STP10 de l'alarme, ladite disparition étant suivie d'une émission dudit signal de retour au premier mode d'affichage. Par exemple, le signal de retour peut prendre la forme d'un signal émis par le système d'alarme 65 et transmis au calculateur d'affichage 30, ce signal étant soit porteur de la fin de l'alarme soit interrompu lorsque le signal était porteur de l'alarme.

Lorsque l'aéronef comporte un dispositif d'affichage 22, 23 au regard d'un deuxième utilisateur UT2 ou partagé avec un deuxième utilisateur UT2, tel qu'un écran 23 disposé sur le panneau central 6 ou un écran 22 disposé en face d'un deuxième utilisateur UT2, quel que soit le premier mode d'affichage ou le deuxième mode d'affichage sélectionné, lorsque le champ d'affichage 80 couvre le dispositif d'affichage 22, 23 le premier afficheur porté 17 peut être inhibé durant une étape temporaire d'inhibition STP11. Ainsi, le calculateur d'affichage 30 transmet un signal de commande d'affichage numérique, analogique ou optique au premier afficheur porté 17 pour requérir de n'afficher aucun symbole tête haute tant que cette situation perdure.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé d'aide au pilotage pour un aéronef (1), l'aéronef (1) comportant un système d'affichage (10) comprenant au moins un premier afficheur porté (17) configuré pour être porté solidaire de la tête d'un premier utilisateur (UT1) dans un cockpit (2) de l'aéronef (1), l'aéronef (1) comportant une planche de bord (5) visible par le premier utilisateur (UT1) dans une position tête basse, le système d'affichage (10) comportant au moins un premier écran (21) de la planche de bord (5), ledit système d'affichage (10) comportant un dispositif de positionnement (40) déterminant une information de position relative au premier afficheur porté (17),
**caractérisé en ce que** le procédé comporte les étapes suivantes :
- sélection (STP1) avec une interface (51) de sélection homme-machine d'un premier mode d'affichage ou d'un deuxième mode d'affichage,
- sous condition que ledit premier mode d'affichage soit sélectionné et que ledit au moins un premier écran (21) affiche au moins un symbole tête basse (82) distinct d'un symbole d'alarme (83) illustrant une alarme, au moins en l'absence d'une dite alarme, contrôle (STP4) automatique dudit au moins un premier écran (21) pour faire disparaitre visuellement ledit symbole tête basse (82) tant qu'un champ d'affichage (80) dudit premier afficheur porté (17) est superposé au moins partiellement audit symbole tête basse (82) à la vue du premier utilisateur (UT1), et
- sous condition que ledit deuxième mode d'affichage soit sélectionné et que ledit premier afficheur porté (17) affiche au moins un symbole tête haute (812) dans le champ d'affichage (80), contrôle (STP5) automatique dudit premier afficheur porté (17) pour faire disparaitre visuellement ledit symbole tête haute (812) tant que ledit symbole tête haute (812) est superposé au moins partiellement audit au moins un premier écran (21) ou à ladite planche de bord (5) à la vue du premier utilisateur (UT1).

2. Procédé d'aide au pilotage selon la revendication 1, **caractérisé en ce que** ledit procédé comporte les étapes suivantes :
- transmission (STP1.1) d'un signal de choix porteur de ladite sélection par ladite interface (51) de sélection homme-machine vers un calculateur d'affichage (30),
- transmission (STP2.1) d'un signal de position dudit dispositif de positionnement (40) vers ledit calculateur d'affichage (30), ledit calculateur d'affichage (30) étant configuré pour contrôler ledit premier afficheur porté (17) et ledit au moins un premier écran (21) en fonction dudit signal de choix et dudit signal de position afin d'appliquer ledit premier mode d'affichage ou ledit deuxième mode d'affichage.

3. Procédé d'aide au pilotage selon l'une quelconque des revendications 1 à 2,
**caractérisé en ce que** ledit contrôle dudit au moins un premier écran (21) pour faire disparaître visuellement ledit symbole tête basse (82) comporte une étape de réduction (STP6) jusqu'à extinction d'une luminosité au moins d'une zone tête basse (92) dudit au moins un premier écran (21), ladite zone tête basse (92) contenant ledit au moins un symbole tête basse (82) recouvert par ledit champ d'affichage (80).

4. Procédé d'aide au pilotage selon l'une quelconque des revendications 1 à 3,
**caractérisé en ce que** sous condition que ledit au moins un premier écran (21) affiche un symbole d'alarme (83) dans une zone d'alarme (93) et que ledit premier mode d'affichage soit sélectionné, le procédé comporte une étape de baisse (STP6) d'une luminosité de la zone d'alarme (93) contenant ledit symbole d'alarme (83) jusqu'à un niveau non nul de luminosité tant que ledit champ d'affichage (80) dudit premier afficheur porté (17) couvre au moins partiellement ladite zone d'alarme (93).

5. Procédé d'aide au pilotage selon la revendication 4,
**caractérisé en ce que** ladite étape de baisse (STP6) comporte une étape de réduction (STP6.1) de ladite luminosité de la zone d'alarme (93) d'une valeur initiale jusqu'à une valeur finale, ladite valeur finale étant égale à 50 pourcents de la valeur initiale plus ou moins 10 pourcents de la valeur initiale.

6. Procédé d'aide au pilotage selon l'une quelconque des revendications 1 à 5,
**caractérisé en ce que** ledit au moins un premier écran (21) comprenant une zone d'alarme (93) dans laquelle est affiché au moins un dit symbole d'alarme et au moins une zone tête basse (92) dans laquelle est affiché au moins un dit symbole tête basse (82), ladite zone d'alarme (93) est située sous ladite zone tête basse (92) lorsque l'aéronef (1) est normalement posé au sol

7. Procédé d'aide au pilotage selon l'une quelconque des revendications 1 à 3,
**caractérisé en ce que** le procédé comporte les étapes suivantes :
- émission (STP7) d'une alarme avec un système d'alarme (65),
- sous condition de sélection dudit premier mode d'affichage, application (STP8) automatique dudit deuxième mode d'affichage suite à ladite émission d'une alarme tant qu'un signal de retour au premier mode d'affichage n'est pas émis.

8. Procédé d'aide au pilotage selon la revendication 7,
**caractérisé en ce que** le procédé comporte au moins une des procédures suivantes :
- acquittement (STP9) de ladite alarme avec une interface (53) d'acquittement homme-machine, ledit acquittement étant suivi d'une émission dudit signal de retour au premier mode d'affichage,
- disparition (STP10) de ladite alarme, ladite disparition étant suivie d'une émission dudit signal de retour au premier mode d'affichage.

9. Procédé d'aide au pilotage selon l'une quelconque des revendications 1 à 8,
**caractérisé en ce que** ledit procédé comporte une étape de détermination (STP2) d'une position dudit premier afficheur porté (17) dans un repère (REP) de l'aéronef (1), ledit procédé comportant une étape de détermination de la position dudit champ d'affichage (80) par rapport au moins audit premier écran (21) en fonction de ladite position et d'une définition géométrique mémorisée dudit cockpit (2).

10. Procédé d'aide au pilotage selon l'une quelconque des revendications 1 à 9,
**caractérisé en ce que** ledit premier écran (21) étant disposé en face du premier utilisateur (UT1), l'aéronef (1) comportant au moins un dispositif d'affichage (22, 23) au regard d'un deuxième utilisateur (UT2) ou partagé avec un deuxième utilisateur (UT2), quel que soit le premier mode d'affichage ou le deuxième mode d'affichage sélectionné, lorsque ledit champ d'affichage (80) du premier afficheur porté (17) couvre le dispositif d'affichage (22, 23) à la vue du premier utilisateur (UT1) alors ledit premier afficheur porté (17) est inhibé (STP11).

11. Aéronef (1) comportant un système d'affichage (10) comprenant au moins un premier afficheur porté (17) configuré pour être porté solidaire de la tête d'un premier utilisateur (UT1) dans un cockpit (2) de l'aéronef (1), l'aéronef (1) comportant une planche de bord (5) visible par le premier utilisateur (UT1) dans une position tête basse (POSB), le système d'affichage (10) comportant au moins un premier écran (21) de la planche de bord (5), ledit système d'affichage (10) comportant un calculateur d'affichage (30), ledit calculateur d'affichage (30) étant configuré pour commander le premier afficheur porté (17) et ledit au moins un premier écran (21), ledit système d'affichage (10) comportant un dispositif de positionnement (40) déterminant une information relative à un champ d'affichage (80) couvert par ledit premier afficheur porté (17),
**caractérisé en ce que** ledit aéronef (1) comporte une interface (51) de sélection homme-machine pour sélectionner au moins un premier mode d'affichage et un deuxième mode d'affichage au choix, ledit calculateur d'affichage (30) étant relié à ladite interface (51) de sélection homme-machine et étant configuré pour appliquer le procédé selon l'une quelconque des revendications 1 à 10.

12. Aéronef selon la revendication 11,
**caractérisé en ce que** ledit aéronef (1) comporte un système d'alarme (65) communiquant avec le calculateur d'affichage (30).

13. Aéronef selon l'une quelconque des revendications 11 à 12,
**caractérisé en ce que** ledit aéronef (1) comporte une interface (53) d'acquittement homme-machine pour acquitter une alarme communiquant avec le calculateur d'affichage (30).

## Patentansprüche

1. Steuerungsunterstützungsverfahren für ein Luftfahrzeug (1), wobei das Luftfahrzeug (1) ein Anzeigesystem (10) mit mindestens einer ersten getragenen Anzeige (17) umfasst, die konfiguriert ist, um fest am Kopf eines ersten Benutzers (UT1) in einem Cockpit (2) des Luftfahrzeugs (1) getragen zu werden, das Luftfahrzeug (1) ein Armaturenbrett (5) umfasst, das für den ersten Benutzer (UT1) in einer Position mit gesenktem Kopf sichtbar ist, das Anzeigesystem (10) mindestens einen ersten Bildschirm (21) des Armaturenbretts (5) umfasst, und das Anzeigesystem (10) eine Positionierungsvorrichtung (40) umfasst, die eine Positionsinformation bezüglich der ersten getragenen Anzeige (17) bestimmt,
**dadurch gekennzeichnet, dass** das Verfahren die folgenden Schritte umfasst:
- mittels einer Mensch-Maschine-Auswahlschnittstelle (51), Auswählen (STP1) eines ersten Anzeigemodus oder eines zweiten Anzeigemodus,
- unter der Bedingung, dass der erste Anzeigemodus ausgewählt ist und dass der mindestens eine erste Bildschirm (21) mindestens ein Kopf-gesenkt-Symbol (82) anzeigt, das sich von einem Alarmsymbol (83) unterscheidet, das einen Alarm anzeigt, zumindest wenn kein besagter Alarm vorliegt, automatisches Steuern (STP4) des mindestens einen ersten Bildschirms (21), um das Kopf-gesenkt-Symbol (82) visuell verschwinden zu lassen, solange ein Anzeigefeld (80) der ersten getragenen Anzeige (17) das Kopf-gesenkt-Symbol (82) in der Sicht des ersten Benutzers (UT1) mindestens teilweise überlagert, und
- unter der Bedingung, dass der zweite Anzeigemodus ausgewählt ist und dass die erste getragene Anzeige (17) mindestens ein Kopf-oben-Symbol (812) in dem Anzeigefeld (80) anzeigt, automatisches Steuern (STP5) der ersten getragenen Anzeige (17), um das Kopf-oben-Symbol (812) visuell verschwinden zu lassen, solange das Kopf-oben-Symbol (812) aus Sicht des ersten Benutzers (UT1) den mindestens einen ersten Bildschirm (21) oder das Armaturenbrett (5) mindestens teilweise überlagert.

2. Steuerungsunterstützungsverfahren nach Anspruch 1,
**dadurch gekennzeichnet, dass** das Verfahren die folgenden Schritte umfasst:
- Übertragen (STP1.1) eines Auswahlsignals, das die von der Mensch-Maschine-Auswahlschnittstelle (51) getroffene Auswahl darstellt, an einen Anzeigerechner (30),
- Übertragen (STP2.1) eines Positionssignals von der Positionierungsvorrichtung (40) an den Anzeigerechner (30), wobei der Anzeigerechner (30) konfiguriert ist, um die erste getragene Anzeige (17) und den mindestens einen ersten Bildschirm (21) in Abhängigkeit von dem Auswahlsignal und dem Positionssignal zu steuern, um den ersten Anzeigemodus oder den zweiten Anzeigemodus zu implementieren.

3. Steuerungsunterstützungsverfahren nach einem der Ansprüche 1 bis 2,
**dadurch gekennzeichnet, dass** die Steuerung des mindestens einen ersten Bildschirms (21), um das Kopf-gesenkt-Symbol (82) visuell verschwinden zu lassen, einen Schritt des Reduzierens (STP6) einer Helligkeit mindestens eines Kopf-gesenkt-Bereichs (92) des mindestens einen ersten Bildschirms (21) bis zum Erlöschen umfasst, wobei der Kopf-gesenkt-Bereich (92) das mindestens eine Kopf-gesenkt-Symbol (82) enthält, das von dem Anzeigefeld (80) überdeckt wird.

4. Steuerungsunterstützungsverfahren nach einem der Ansprüche 1 bis 3,
**dadurch gekennzeichnet, dass** unter der Bedingung, dass der mindestens eine erste Bildschirm (21) in einem Alarmbereich (93) ein Alarmsymbol (83) anzeigt und dass der erste Anzeigemodus ausgewählt ist, das Verfahren einen Schritt des Herabsetzens (STP6) einer Helligkeit des Alarmbereichs (93), der das Alarmsymbol (83) enthält, auf ein von Null verschiedenes Helligkeitsniveau umfasst, solange das Anzeigefeld (80) des ersten getragenen Displays (17) den Alarmbereich (93) zumindest teilweise überdeckt.

5. Steuerungsunterstützungsverfahren nach Anspruch 4,
**dadurch gekennzeichnet, dass** der Schritt des Herabsetzens (STP6) einen Schritt des Herabsetzens (STP6.1) der Helligkeit des Alarmbereichs (93) von einem Anfangswert auf einen Endwert umfasst, wobei der Endwert gleich 50 Prozent des Anfangswerts plus oder minus 10 Prozent des Anfangswerts ist.

6. Steuerungsunterstützungsverfahren nach einem der Ansprüche 1 bis 5,
**dadurch gekennzeichnet, dass** der mindestens eine erste Bildschirm (21) einen Alarmbereich (93), in dem mindestens ein besagtes Alarmsymbol angezeigt wird, und mindestens einen Kopf-gesenkt-Bereich (92), in dem mindestens ein besagtes Kopf-gesenkt-Symbol (82) angezeigt wird, umfasst, wobei sich der Alarmbereich (93) unter dem Kopf-gesenkt-Bereich (92) befindet, wenn das Luftfahrzeug (1) normal auf dem Boden steht.

7. Steuerungsunterstützungsverfahren nach einem der Ansprüche 1 bis 3,
**dadurch gekennzeichnet, dass** das Verfahren die folgenden Schritte umfasst:
- Aussenden (STP7) eines Alarms mit einem Alarmsystem (65),
- unter der Bedingung, dass der erste Anzeigemodus ausgewählt ist, automatisches Anwenden (STP8) des zweiten Anzeigemodus nach der Ausgabe eines Alarms, solange kein Signal zur Rückkehr zum ersten Anzeigemodus ausgegeben wird.

8. Steuerungsunterstützungsverfahren nach Anspruch 7,
**dadurch gekennzeichnet, dass** das Verfahren mindestens eine der folgenden Prozeduren umfasst:
- Quittieren (STP9) des Alarms mit einer Mensch-Maschine-Quittierungsschnittstelle (53), wobei auf das Quittieren eine Ausgabe des Signals zur Rückkehr in den ersten Anzeigemodus folgt,
- Verschwinden (STP10) des Alarms, wobei auf das Verschwinden eine Ausgabe des Signals zur Rückkehr in den ersten Anzeigemodus folgt.

9. Steuerungsunterstützungsverfahren nach einem der Ansprüche 1 bis 8,
**dadurch gekennzeichnet, dass** das Verfahren einen Schritt des Bestimmens (STP2) einer Position der ersten getragenen Anzeige (17) in einem Koordinatensystem (REP) des Luftfahrzeugs (1) umfasst, wobei das Verfahren einen Schritt des Bestimmens der Position des Anzeigefeldes (80) in Bezug auf mindestens den ersten Bildschirm (21) in Abhängigkeit von der Position und einer gespeicherten geometrischen Definition des Cockpits (2) umfasst.

10. Steuerungsunterstützungsverfahren nach einem der Ansprüche 1 bis 9,
**dadurch gekennzeichnet, dass** der erste Bildschirm (21) gegenüber dem ersten Benutzer (UT1) angeordnet ist, wobei das Luftfahrzeug (1) mindestens eine Anzeigevorrichtung (22, 23) aufweist, die einem zweiten Benutzer (UT2) gegenüberliegt oder mit einem zweiten Benutzer (UT2) geteilt wird, und dass unabhängig davon, ob der erste Anzeigemodus oder der zweite Anzeigemodus ausgewählt ist, die erste getragene Anzeige (17) gehemmt ist (STP11), wenn aus der Sicht des ersten Benutzers (UT1) das Anzeigefeld (80) der ersten getragenen Anzeige (17) die Anzeigevorrichtung (22, 23) überdeckt.

11. Luftfahrzeug (1) mit einem Anzeigesystem (10), das mindestens eine erste getragene Anzeige (17) umfasst, die konfiguriert ist, um fest am Kopf eines ersten Benutzers (UT1) in einem Cockpit (2) des Luftfahrzeugs (1) getragen zu werden, wobei das Luftfahrzeug (1) ein Armaturenbrett (5) umfasst, das für den ersten Benutzer (UT1) in einer Position mit gesenktem Kopf (POSB) sichtbar ist, wobei das Anzeigesystem (10) mindestens einen ersten Bildschirm (21) des Armaturenbretts (5) umfasst, das Anzeigesystem (10) einen Anzeigerechner (30) umfasst, und der Anzeigerechner (30) konfiguriert ist, um die erste getragene Anzeige (17) und den mindestens einen ersten Bildschirm (21) zu steuern, wobei das Anzeigesystem (10) eine Positionierungsvorrichtung (40) umfasst, die eine Information bezüglich eines durch die erste getragene Anzeige (17) verdeckten Anzeigefeldes (80) bestimmt,
**dadurch gekennzeichnet, dass** das Luftfahrzeug (1) eine Mensch-Maschine-Auswahlschnittstelle (51) zur Auswahl mindestens eines ersten Anzeigemodus und eines zweiten Anzeigemodus nach Wahl umfasst, wobei der Anzeigerechner (30) mit der Mensch-Maschine-Auswahlschnittstelle (51) verbunden ist und konfiguriert ist, um das Verfahren nach einem der Ansprüche 1 bis 10 auszuführen.

12. Luftfahrzeug nach Anspruch 11,
**dadurch gekennzeichnet, dass** das Luftfahrzeug (1) ein Alarmsystem (65) aufweist, das mit dem Anzeigerechner (30) kommuniziert.

13. Luftfahrzeug nach einem der Ansprüche 11 bis 12,
**dadurch gekennzeichnet, dass** das Luftfahrzeug (1) eine Mensch-Maschine-Quittierungsschnittstelle (53) zum Quittieren eines Alarms aufweist, die mit dem Anzeigerechner (30) kommuniziert.

## Claims

1. Method for assisting with piloting an aircraft (1), the aircraft (1) including a display system (10) comprising at least one first head-mounted display (17) configured to be mounted flush with the head of a first user (UT1) in a cockpit (2) of the aircraft (1), the aircraft (1) comprising an instrument panel (5) visible to the first user (UT1) in a head-down position, the display system (10) comprising at least one first screen (21) of the instrument panel (5), said display system (10) comprising a positioning device (40) which determines positional information in relation to the first head-mounted display (17),
**characterized in that** the method comprises the following stages:
- selection (STP1) of a first display mode or of a second display mode using a man-machine selection interface (51),
- provided that said first display mode is selected and that said at least one first screen (21) displays at least one head-down display (82) separate from an alarm symbol (83) illustrating an alarm, at least in the absence of said alarm, automatic control (STP4) of said at least one first screen (21) to make said head-down symbol (82) disappear from sight while a display field (80) of said first head-mounted display (17) is superposed, at least partially, on said head-down symbol (82) in full view of the first user (UT1), and
- provided that said second display mode is selected and that said first head-mounted display (17) displays at least one head-up symbol (812) in the display field (80), automatic control (STP5) of said first head-mounted display (17) to make said head-up symbol (812) disappear from sight while said head-up symbol (812) is superposed, at least partially, on said at least one first screen (21) or on said instrument panel (5) in full view of the first user (UT1).

2. Method for assisting with piloting according to Claim 1,
**characterized in that** said method comprises the following stages:
- transmission (STP1.1) of a selected carrier signal of said selection by said man-machine selection interface (51) to a display calculator (30),
- transmission (STP2.1) of a position signal of said positioning device (40) to said display calculator (30), said display calculator (30) being configured to control said first head-mounted display (17) and said at least one first screen (21), depending on said selected signal and said position signal, in order to apply said first display mode or said second display mode.

3. Method for assisting with piloting according to any one of Claims 1 to 2,
**characterized in that** said control of said at least one first screen (21) to make said head-down symbol (82) disappear from sight comprises a reduction stage (STP6) leading to the elimination of brightness at least in a head-down zone (92) of said at least one first screen (21), said head-down zone (92) containing said at least one head-down symbol (82) covered by said display field (80).

4. Method for assisting with piloting according to any one of Claims 1 to 3,
**characterized in that** provided that said at least one first screen (21) displays an alarm symbol (83) in an alarm zone (93) and that said first display mode is selected, the method comprises a head-down stage (STP6) with a brightness of the alarm zone (93) containing said alarm symbol (83) up to a non-zero level of brightness while said display field (80) of said first head-mounted display (17) covers said alarm zone (93), at least partially.

5. Method for assisting with piloting according to Claim 4,
**characterized in that** said head-down stage (STP6) comprises a reduction stage (STP6.1) of said brightness of the alarm zone (93) from an initial value to a final value, said final value being equal to 50 percent of the initial value plus or minus ten percent of the initial value.

6. Method for assisting with piloting according to any one of Claims 1 to 5,
**characterized in that** said at least one first screen (21) comprising an alarm zone (93), in which at least one said alarm symbol is displayed, and at least one head-down zone (92), in which at least one said head-down symbol (82) is displayed, said alarm zone (93) is situated below said head-down zone (92) when the aircraft (1) is standing on the ground as normal.

7. Method for assisting with piloting according to any one of Claims 1 a 3,
**characterized in that** the method comprises the following stages:
- triggering (STP7) of an alarm with an alarm system (65),
- provided that said first display mode is selected, automatic application (STP8) of said second display mode following said triggering of an alarm while a return signal to the first display mode is not issued.

8. Method for assisting with piloting according to Claim 7,
**characterized in that** the method comprises at least one of the following procedures:
- acknowledgment (STP9) of said alarm with a man-machine acknowledgment interface (53), said acknowledgment being followed by an issuing of said return signal to the first display mode,
- disappearance (STP10) of said alarm, said disappearance being followed by an issuing of said return signal to the first display mode.

9. Method for assisting with piloting according to any one of Claims 1 to 8,
**characterized in that** said method comprises a determining stage (STP2) of a position of said first head-mounted display (17) in a reference point (REP) of the aircraft (1), said method comprising a determining stage of the position of said display field (80), at least in relation to said first screen (21), depending on said position and a memorized geometric definition of said cockpit (2).

10. Method for assisting with piloting according to any one of Claims 1 to 9,
**characterized in that** said first screen (21), being disposed opposite the first user (UT1), the aircraft (1) comprising at least one display device (22, 23) within view of a second user (UT2) or shared with a second user (UT2), whatever the first display mode or the second selected display mode selected, when said display field (80) of the first head-mounted display (17) covers the display device (22, 23) within full view of the first user (UT1) when said first head-mounted display (17) is inhibited (STP11).

11. Aircraft (1) including a display system (10) comprising at least one first head-mounted display (17) configured to be mounted flush with the head of a first user (UT1) in a cockpit (2) of the aircraft (1), the aircraft (1) comprising an instrument panel (5) visible to the first user (UT1) in a head-down position (POSB), the display system (10) comprising at least one first screen (21) of the instrument panel (5), said display system (10) comprising a display calculator (30), said display calculator (30) being configured to control the first head-mounted display (17) and said at least one first screen (21), said display system (10) comprising a positioning device (40) which determines information in relation to a display field (80) covered by said first head-mounted display (17),
**characterized in that** said aircraft (1) comprises a man-machine selection interface (51) for selecting at least one first display mode and one second display mode from a choice, said display calculator (30) being linked to said man-machine selection interface (51) and being configured to apply the method according to any one of Claims 1 to 10.

12. Aircraft according to Claim 11,
**characterized in that** said aircraft (1) comprises an alarm system (65) communicating with the display calculator (30).

13. Aircraft according to any one of Claims 11 to 12,
**characterized in that** said aircraft (1) comprises a man-machine acknowledgment interface (53) to acknowledge an alarm communicating with the display calculator (30).
